(19) Europäisches Patentamt
European Patent Office
Office européen des brevets

(11) EP 1 594 240 A1

(12) **EUROPEAN PATENT APPLICATION**
published in accordance with Art. 158(3) EPC

(43) Date of publication:
**09.11.2005 Bulletin 2005/45**

(21) Application number: **04720758.4**

(22) Date of filing: **15.03.2004**

(51) Int Cl.[7]: **H04J 11/00**, H04J 13/06

(86) International application number:
**PCT/JP2004/003437**

(87) International publication number:
**WO 2004/082182 (23.09.2004 Gazette 2004/39)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **14.03.2003 JP 2003071016**

(71) Applicant: **MATSUSHITA ELECTRIC INDUSTRIAL CO., LTD.**
**Kadoma-shi, Osaka 571-8501 (JP)**

(72) Inventors:
- **YOSHII, Isamu**
**Chiba 279-0014 (JP)**
- **FUKUOKA, Masaru**
**Ishikawa 920-0342 (JP)**

(74) Representative: **Grünecker, Kinkeldey, Stockmair & Schwanhäusser Anwaltssozietät**
**Maximilianstrasse 58**
**80538 München (DE)**

(54) **APPARATUS AND METHOD FOR OFDM RECEPTION**

(57) An interference symbol determining section 208 compares reception power of a signal at an interference position measured by an interference position reception power measuring section 208B with a reception power value of a desired signal measured by a desired signal measuring section 208D for each subcarrier, thereby determines symbols which should be actually treated as interference symbols and outputs the symbols to a turbo decoding section 209. The turbo decoding section 209 determines whether to calculate LLR values of symbols of each subcarrier signal input from a demodulation section 207 or set the LLR values to "0" based on the comparison result of the interference symbol determining section 208 and executes decoding processing.

200:RECEPTION APPARATUS
201
202
RADIO PROCESSING SECTION
203
GI ELIMINATION SECTION
204
FFT SECTION
205
FREQUENCY DEINTERLEAVE SECTION
206
CHANNEL SEPARATION SECTION
207
DEMODULATION SECTION
209
TURBO DECODING SECTION
USER 1 DATA
208:INTERFERENCE SYMBOL DETERMINING SECTION
208A
INTERFERENCE POSITION DETERMINING SECTION
208B
INTERFERENCE POSITION RECEPTION POWER MEASURING SECTION
208E
COMPARISON SECTION
208C
PILOT EXTRACTION SECTION
208D
DESIRED SIGNAL MEASURING SECTION

FIG.8



Printed by Jouve, 75001 PARIS (FR)

## Description

Technical Field

The present invention particularly relates to an OFDM reception apparatus and OFDM reception method used for an OFDM system according to a frequency hopping scheme.

Background Art

In recent years, a mobile communication systembased on an OFDM scheme using frequency hopping is under study. An OFDM system using frequency hopping carries out communication using different hopping patterns among a plurality of cells and thereby averaging interference among cells.

A mobile communication system using a multicarrier scheme including a frequency hopping OFDM scheme adopts a coding scheme premised on MAP (Maximum a posteriori) decoding using a soft decision value such as turbo code or LDPC (Low Density Parity Check) code for coding of transmission information.

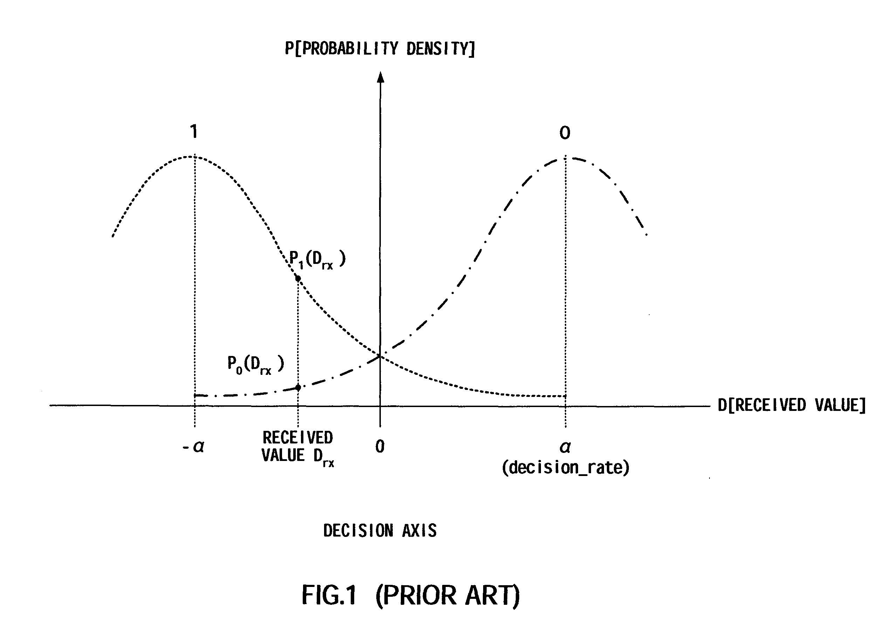

Furthermore, turbo code decoding processing is derived on the assumption that a transmission path is in an AWGN (Additive White Gaussian Noise) environment and can calculate, for example, an LLR value of a turbo code from an LLR (Log Likelihood Ratio) calculation model shown in FIG. 1 (see, for example, Wataru Matsumoto, Hideki Ochiai: "Application of OFDMModulation Scheme", Triceps, WS No.216 (2001-10), pp.80).

In FIG.1, D [received value] is set on the horizontal axis, P [probability density] is set on the vertical axis, a dotted line shows a Gaussian distribution of symbol "1" when noise is received, a single-dot dashed line shows a Gaussian distribution of symbol "0" when noise is received and both Gaussian distributions show a variance with $\sigma^2$. "$\alpha$" is a decision rate of symbol "0" and "-$\alpha$" is a decision rate of symbol "1" indicating that P [probability density] becomes a maximum value at these decision rates. Furthermore, the figure shows that a probability density P of a certain received value Drx is P1 (Drx) on the dotted line of symbol "1" and P0 (Drx) on the single-dot dashed line of symbol "0".

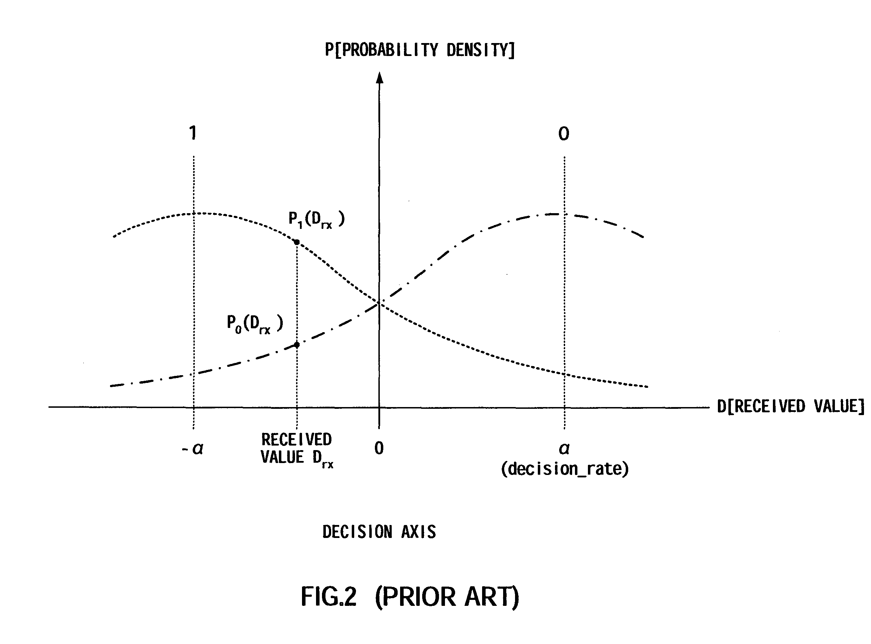

Furthermore, distribution states of symbol "0" and "1" when noise power is large are shown in FIG.2. Thus, when noise power increases, the variance width of $\sigma$ 2 increases and maximum values of the respective probability densities P at decision rates $\alpha$, -$\alpha$ of symbols "0" and "1" may become extremely small.

In the case of frequency hopping OFDM (hereinafter referred to as "FH-OFDM"), when collision occurs at a certain subcarrier, the symbols of the subcarrier are believed to appear as shown in FIG.2. In this case, this means that the SNR (Signal to Noise Ratio) is lower than those of surrounding subcarriers, and therefore errors are likely to occur in the LLR values of symbols "0" and "1". Furthermore, when an error occurs in a symbol decision, the influence of this error may also affect LLR values of symbols of other subcarriers.

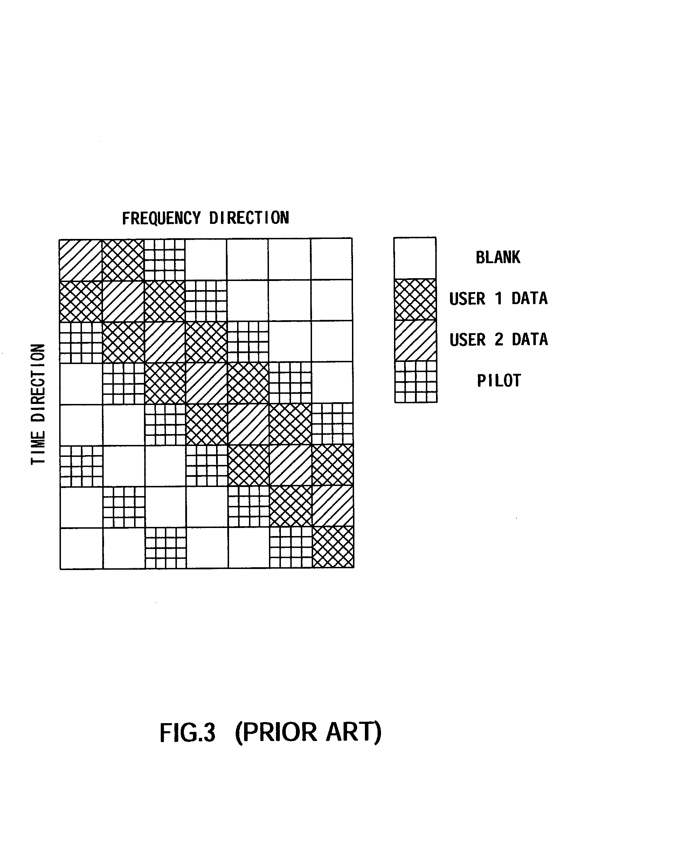

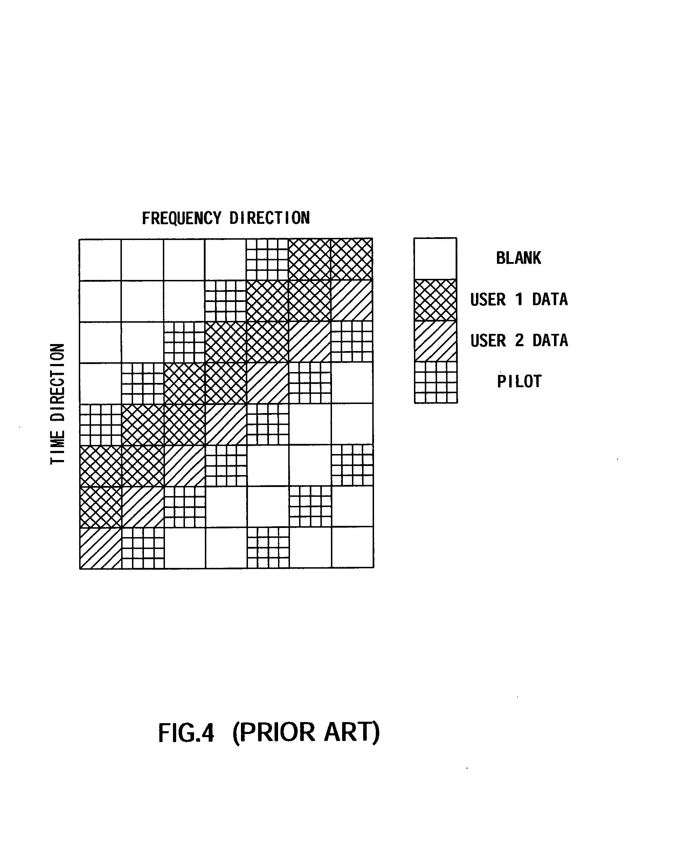

In an environment with two cells, an example of resource assignment of users and pilots of a base station in the own cell is shown in FIG.3 and that in other cells is shown FIG.4. In this regard, 1 block in the frequency direction indicates 1 subcarrier and 1 block in the time direction indicates 1 burst period in FIG.3 and FIG.4.

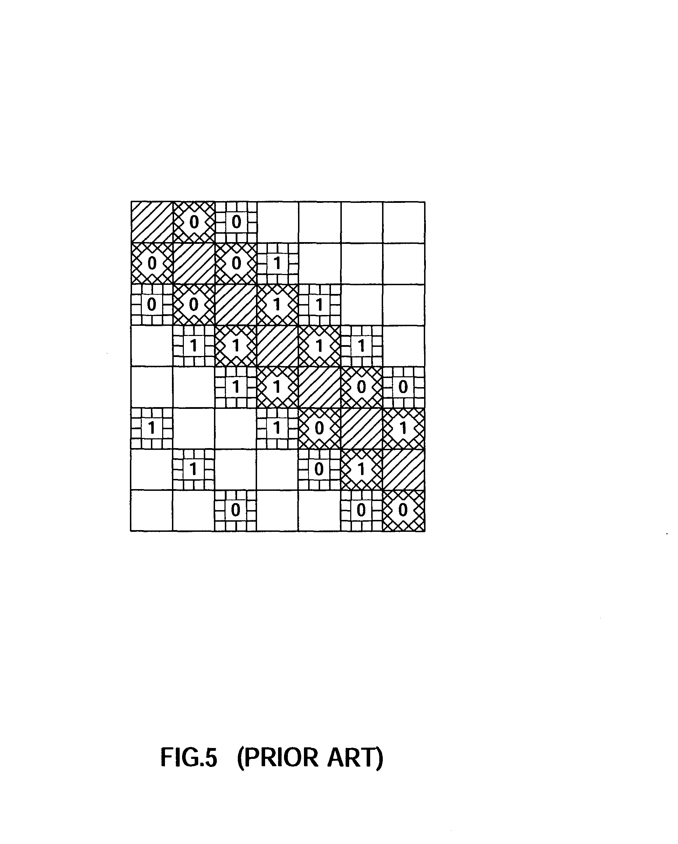

Normally, a user's hopping patterns and resource assignment are determined at random in the own cell and other cells, and therefore collision (hit) may occur accidentally at a certain subcarrier at a certain time point. A hit situation between user 1 signals and pilot signals in the own cell and signals in the other cell is shown in FIG. 5. "0" indicates that no hit has occurred, while "1" indicates that a hit has occurred.

As described above, the turbo code and LDPC code are designed on the premise of an AWGN channel and such a hit is not assumed, and therefore if a hit occurs, this provokes great characteristic deterioration.

Therefore, an OFDM reception apparatus which decides the presence/absence of error data which will provoke an error in an LLR value and corrects the error beforehand is proposed in, for example, the Unexamined Japanese Patent Publication No.HEI 11-355240 (hereinafter referred to as "Patent Document 1").

In the case of a carrier having reference data given for each carrier or a preceding symbol for differential demodulation, the amplitude of which is smaller than a given threshold, this OFDM reception apparatus regards the data of the carrier as having been lost, inserts null data, outputs a soft decision sequence and carries out soft decision decoding on the soft decision sequence using Viterbi decoding, etc. Furthermore, in the case of a carrier greater than another given threshold, the OFDM reception apparatus regards the carrier data as having been lost, inserts null data, outputs a soft decision sequence and thereby improves an error correcting effect when soft decision decoding is carried out.

However, the conventional OFDM reception apparatus assumes only one modulation scheme of a PSK system, prepares two thresholds and sets a null signal (zero: 0) for a soft decision value having a high noise level of a received signal due to drop of fading and interference.

At this time, there may be two problems.

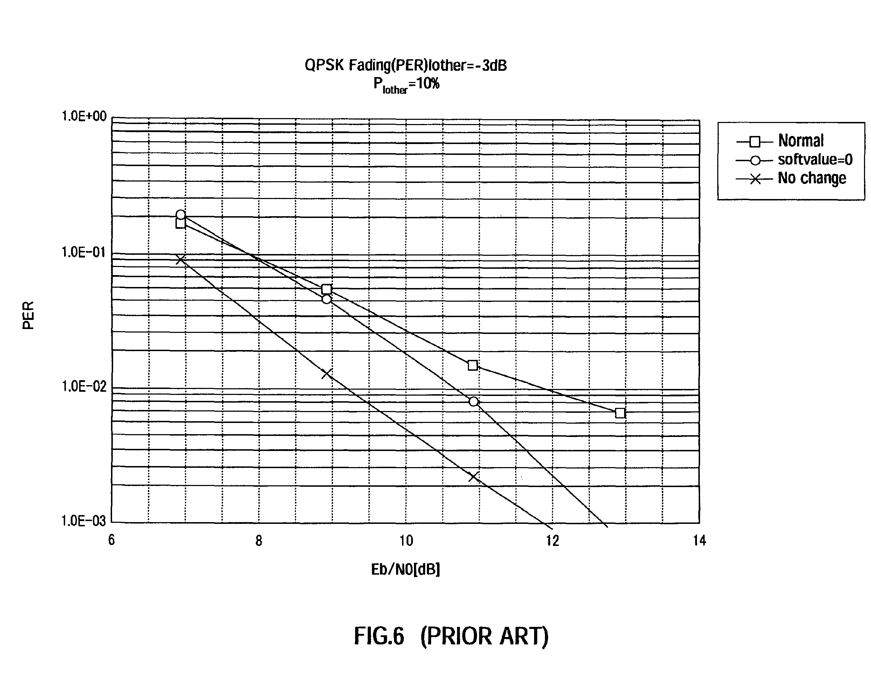

1) Even if an interference decision is complete, the characteristic need not always become better depending on an amount of interference (FIG.6). This is because the decoding characteristic deteriorates when there are too many "0"s. FIG.6 illustrates, assuming a case where the modulation scheme is QPSK and the proportion of carriers where interference exists is 40%, an error rate (plot "Normal: □" in the figure) during a calculation of a normal LLR value, error rate characteristic (plot "softvalue=0: ○" in the figure) during a calculation of an LLR value when the soft decision value is assumed to be 0 and error rate characteristic (plot "No change: ×" ideal curve in the figure) during a calculation of an LLR value when there is no interference.

2) When adaptive modulation is used to improve data transmission efficiency, not only PSK system but also QAM system modulation may be used. When QAM system modulation is assumed, power values of symbols vary depending on data, and therefore it is not possible to decide interference against two thresholds. That is, two thresholds are not enough to be applied to adaptive modulation using QAM system modulation.

Disclosure of Invention

It is an object of the present invention to provide an OFDM reception apparatus and OFDM reception method capable of correctly detecting interference positions which may actually cause deterioration of an error rate characteristic and improving error correcting performance during soft decision decoding.

This object is attained by detecting a hopping position at which interference occurs based on hopping pattern information of, for example, an adjacent cell or adjacent sector and a hopping pattern of the own cell or own sector, extracting a pilot signal from each subcarrier of a received frequency hopping OFDM signal, measuring reception power of a desired signal based on the extracted pilot signal sequence and known pilot signal sequence, comparing reception power of the signal at the detected interference position with a reception power value of the measured desired signal for each subcarrier, selecting whether reception power of symbols of the respective subcarriers should be used as they are or set to 0 based on the comparison result and carrying out turbo decoding.

Thus, the reception power of the signal at the detected interference position and the reception power value of the measured desired signal are compared for each subcarrier and whether the reception power of symbols of the respective subcarriers should be used as they are or set to 0 based on the comparison result, and therefore it is possible to correctly detect symbols to be treated as interference symbols and improve error correcting performance during soft decision decoding. That is, it is possible to avoid symbols which are at interference positions but do not cause any adverse influence on an error rate characteristic when used for decoding from being excluded unnecessarily from decoding targets and thereby improve error correcting performance during soft decision decoding.

Brief Description of Drawings

FIG.1 illustrates a conventional LLR value calculation model;
FIG.2 illustrates a conventional LLR value calculation model under high noise levels;
FIG.3 illustrates an example of own cell hopping pattern;
FIG.4 illustrates an example of other cell hopping pattern;
FIG.5 illustrates a hit situation between user 1 signals and pilot signals of the own cell, and signals of the other cell;
FIG. 6 illustrates an error rate characteristic when a conventional LLR value is calculated;
FIG.7 is a block diagram showing the configuration of a transmission apparatus according to Embodiment 1 of the present invention;
FIG.8 is a block diagram showing the configuration of a reception apparatus according to Embodiment 1;
FIG.9 illustrates an error rate characteristic when an LLR value is calculated (est sigma) according to Embodiment 1;
FIG.10 illustrates an example of hopping pattern of the own cell according to Embodiment 2;
FIG.11 illustrates an example of hopping pattern of the other cell according to Embodiment 2;
FIG.12 illustrates a hit situation between user 1 signals of the own cell and signals of the other cell;
FIG.13 illustrates a block diagram showing the configuration a transmission apparatus according to Embodiment 2;
FIG.14 illustrates a block diagram showing the configuration a transmission apparatus according to Embodiment 3;

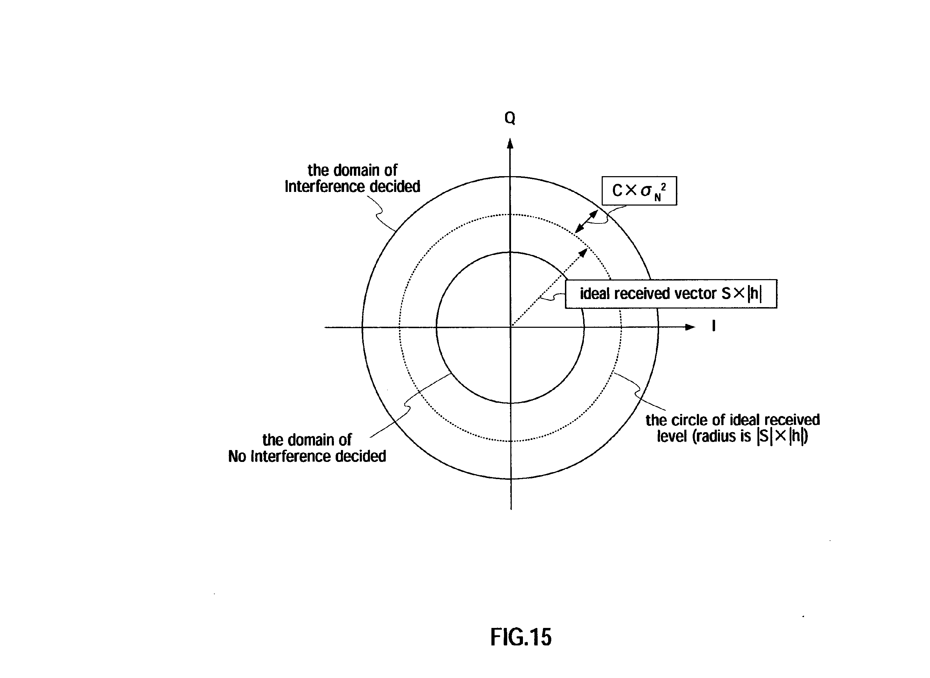

FIG.15 schematically illustrates Expression (1) of Embodiment 3;
FIG.16 illustrates an error rate characteristic when an LLR value is calculated (est sigma) according to Embodiment 3;
FIG.17 schematically illustrates Expression (2) of Embodiment 4;
FIG.18 illustrates an error rate characteristic when an LLR value is calculated (est sigma) according to Embodiment 4;

FIG.19 is a flow chart illustrating the operations of an interference symbol determining section and turbo decoding section in a reception apparatus according to Embodiment 5;

FIG.20 is a flow chart illustrating the operations of an interference symbol determining section and turbo decoding section in a reception apparatus according to Embodiment 6; and

FIG.21 is a flow chart illustrating the operations of an interference symbol determining section and turbo decoding section in a reception apparatus according to Embodiment 7.

Best Mode for Carrying out the Invention

With reference now to the attached drawings, embodiments of the present invention will be explained in detail below.

(Embodiment 1)

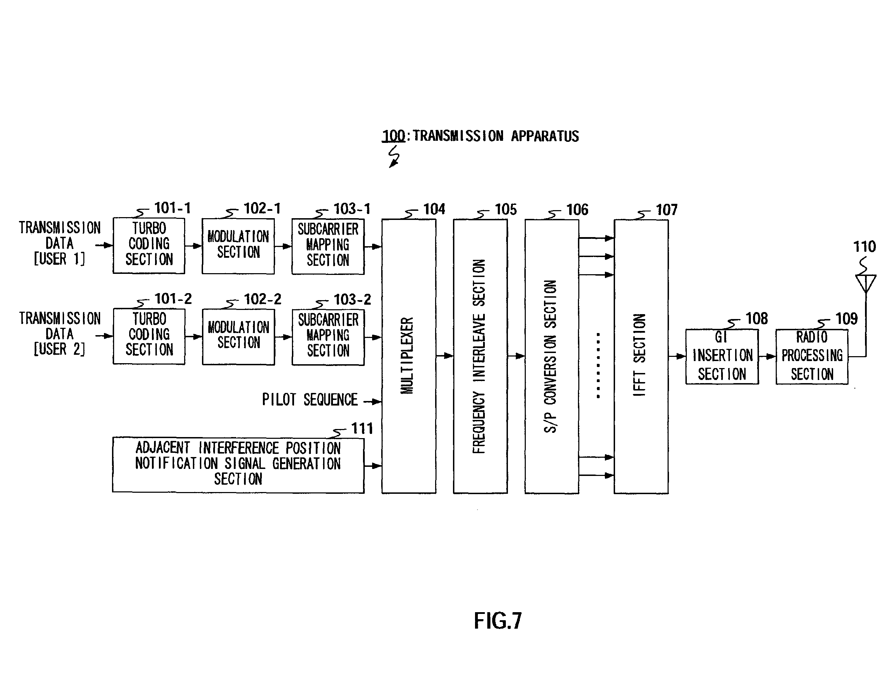

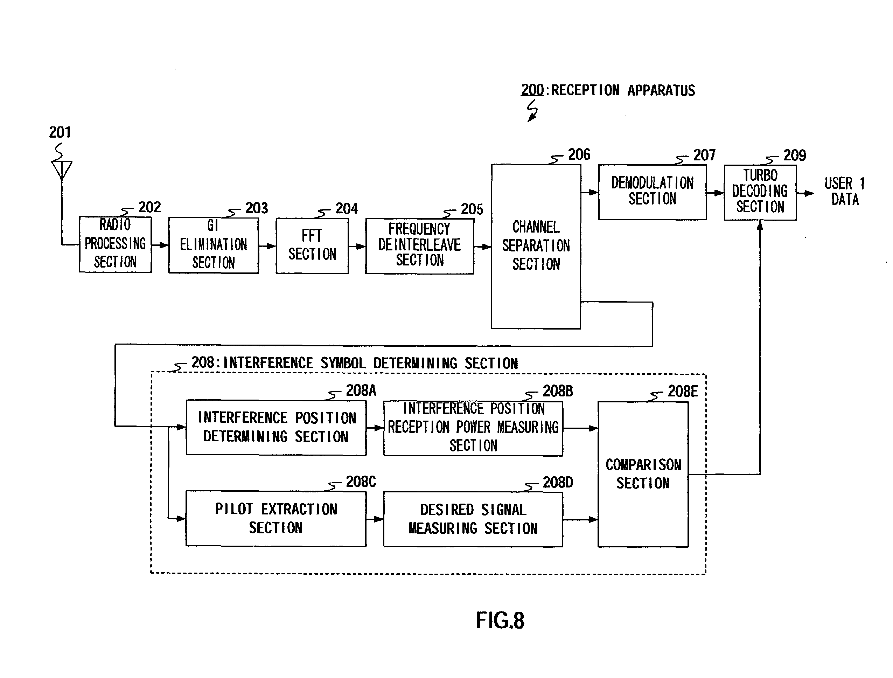

With reference to the attached drawings, embodiments of the present invention will be explained in detail below. FIG.7 is a block diagram showing the configuration of a transmission apparatus according to a frequency hopping OFDM scheme (hereinafter referred to as "FH-OFDM scheme") according to an embodiment of the present invention and FIG. 8 is a block diagram showing the configuration of a reception apparatus according to an FH-OFDM scheme according to this embodiment related to user 1. Here, a transmission apparatus 100 is provided for a base station and a reception apparatus 200 is provided for a communication terminal.

The transmission apparatus 100 provided for the base station is principally constructed of turbo coding sections 101-1, 101-2, modulation sections 102-1, 102-2, subcarrier mapping sections 103-1, 103-2, a multiplexer 104, a frequency interleave section 105, a serial/parallel (S/P) conversion section 106, an inverse fast Fourier transform (IFFT) section 107, a guard interval (GI) insertion section 108, a radio processing section 109, an antenna 110 and an adjacent interference position notification signal generation section 111.

The turbo coding sections 101-1, 101-2 carry out turbo coding on transmission data of user 1, user 2 and output turbo code signals to the modulation sections 102-1, 102-2.

The modulation sections 102-1, 102-2 have different code modulation functions and adopt a modulation scheme, for example, 16QAM (Quad Amplitude Modulation), 64QAM, as a QAM system or BPSK (Binary Phase Shift Keying), QPSK (Quad Phase Shift Keying), 8PSK as a PSK system.

The modulation sections 102-1, 102-2 carry out adaptive modulation processing on the turbo code signals input from the turbo coding sections 101-1, 101-2 and output the modulated signals acquired to the subcarrier mapping sections 103-1, 103-2.

The subcarrier mapping sections 103-1, 103-2 carry out mapping processing of mapping the modulated signals input from the modulation sections 102-1, 102-2 to their respective subcarriers according to predetermined hopping patterns and output the mapped signals to the multiplexer 104.

The outputs of the subcarrier mapping sections 103-1, 103-2, a pilot sequence and the output of the adjacent interference position notification signal generation section 111 are input to the multiplexer 104 and the multiplexer 104 sends a serial signal resulting from multiplexing these signals to the frequency interleave section 105.

In this embodiment, the adjacent interference position notification signal generation section 111 generates hopping pattern information of the own cell as an adjacent interference position notification signal. This allows a communication terminal to recognize a position at which interference occurs (that is, a subcarrier and time at which interference occurs) based on an adjacent interference position notification signal (hopping pattern information) sent from the transmission apparatus 100 provided on a base station in an adjacent cell (other cell) and hopping pattern information of the cell (own cell) in which the communication terminal is currently located.

The frequency interleave section 105 reads the serial signal input from the multiplexer 104 in such a way that arrangement directions of a plurality of data sequences included in the serial signal interlace with one another and outputs the interlaced serial signal to the S/P conversion section 106 as an interleave signal.

The IFFT section 107 applies an inverse fast Fourier transform to the respective subcarrier components of a plurality of data sequence signals input from the S/P conversion section 106, thereby transforms data of the respective subcarriers to a time domain and outputs a time waveform signal to the GI insertion section 108.

The GI insertion section 108 inserts a guard interval for improving a delay characteristic into the time waveform signal input from the IFFT section 107 and outputs the signal to the radio processing section 109.

The radio processing section 109 up-converts the time waveform signal input from the GI insertion section 108 to an RF band and transmits an OFDM signal from the antenna 110.

The reception apparatus 200 shown in FIG.8 is provided for a communication terminal and principally constructed of an antenna 201, a radio processing section 202, a guard interval (GI) elimination section 203, a fast Fourier transform (FFT) section 204, a frequency deinterleave section 205, a channel separation section 206, a demodulation section 207, an interference symbol determining section 208 and a turbo decoding section 209.

The radio processing section 202 receives the OFDM signal from the antenna 201 and outputs the OFDM signal to the GI elimination section 203.

The GI elimination section 203 eliminates the guard interval from the OFDM signal input from the radio processing section 202 and outputs the signal to the FFT section 204.

The FFT section 204 applies a fast Fourier transform (FFT) to the OFDM signal after guard interval elimination input from the GI elimination section 203 and transforms the signal from the time domain to frequency domain. This FFT section 204 extracts the data sequence signals transmitted through a plurality of subcarriers and outputs these data sequence signals to the frequency deinterleave section 205.

The frequency deinterleave section 205 reads the plurality of data sequence signals input from the FFT section 204 in an arrangement direction opposite to the direction in which they are interleaved in the transmission apparatus 100, restores a serial signal including a data sequence of the original serial arrangement and outputs the serial signal to the channel separation section 206.

The channel separation section 206 separates the serial signal including a plurality of subcarrier signals input from the frequency deinterleave section 205 into the respective subcarrier signals and outputs the signal of user 1 (that is, signal directed to the own station) of those subcarrier signals to the demodulation section 207 and the interference symbol determining section 208.

The demodulation section 207 demodulates the subcarrier signals input from the channel separation section 206 and outputs the demodulated signals to the turbo decoding section 209.

The interference symbol determining section 208 determines a symbol to be actually treated as an interference symbol out of symbols whose hopping patterns collide with hopping patterns in an adjacent cell.

More specifically, an interference position determining section 208A determines a hopping position where interference occurs (that is, hopping pattern position where collision occurs between hopping patterns) from the hopping pattern of the adjacent cell notified and the hopping pattern of the own station and sends this interference position information to an interference position reception power measuring section 208B. The interference position reception power measuring section 208B measures reception power at the interference position and sends the measured value to a comparison section 208E.

On the other hand, the interference symbol determining section 208 extracts a pilot signal by a pilot extraction section 208C, calculates reception power of a desired signal by a desired signal measuring section 208D that follows based on the reception power of the pilot signal and sends the reception power of this desired signal to the comparison section 208E.

The comparison section 208E compares the reception power of the pilot signal (reception power of the desired signal) with the reception power of the symbol at the hopping position at which interference occurs for each subcarrier, thereby determines the symbol to be actually treated as the interference symbol and notifies the turbo decoding section 209 of the comparison result indicating the symbol. In the case of this embodiment, a difference between a received signal and desired signal is calculated for each subcarrier and when the difference is large, the symbol is regarded as an interference symbol.

In this way, instead of simply determining an interference symbol based on a hopping pattern, the interference symbol determining section 208 instructs the turbo decoding section to carry out turbo decoding by setting reception power of a symbol to 0 only when the symbol is located at an interference position based on a hopping pattern and at the same time an SIR (Signal to Interference Ratio) is bad in consideration of the fact that the SIR may be good or bad due to influences of fading, etc., even at the interference position based on the hopping pattern. As a result, even in a situation in which both interference power and reception power fluctuate due to fading, for example, in a situation in which both reception power and interference power values fall due to fading, interference symbols are compared and decided for each subcarrier, and therefore it is possible to correctly detect interference symbols.

In this regard, power of a desired signal can be measured based on a pilot signal using a method of dividing power of the received signal by power of the desired signal for each subcarrier. Furthermore, the magnitude of the interference signal can be calculated from a difference between the received signal and desired signal.

The turbo decoding section 209 carries out turbo decoding by selecting whether the reception power of symbols of each subcarrier should be used as is or should be set to 0 based on the interference symbol position (comparison result) notified from the interference symbol determining section 208 and calculating an LLR value. More specifically, for symbols of a subcarrier decided to be interference symbols by the interference symbol determining section 208, the turbo decoding section 209 carries out turbo decoding by regarding the reception power thereof as 0.

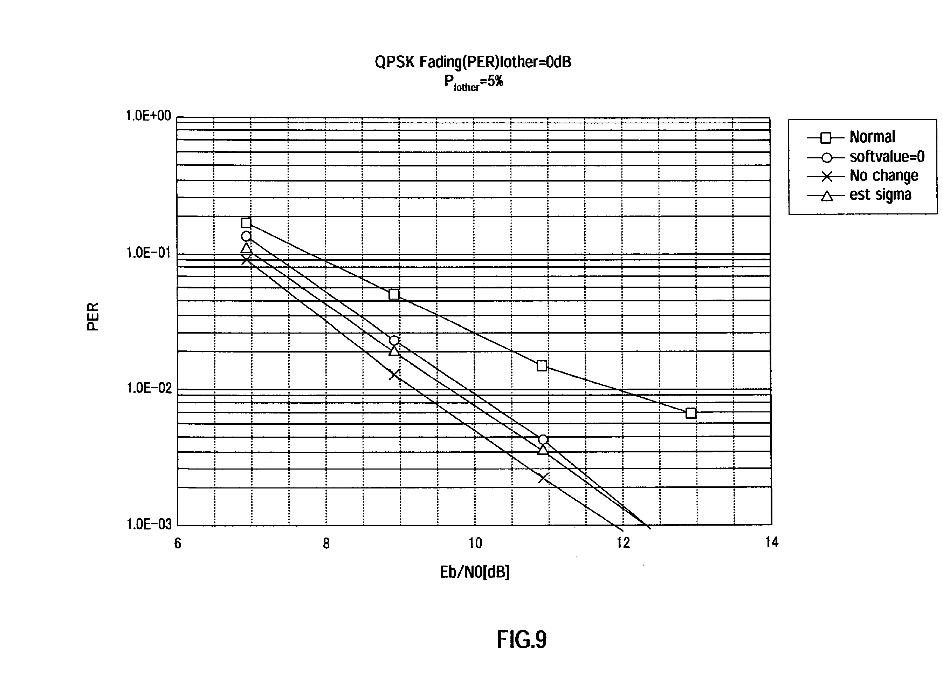

FIG.9 shows, assuming a case where the modulation scheme is QPSK and the ratio of carriers in which interference exists is 5%, an error rate (plot "Normal: □" in the figure) when a normal LLR value is calculated, an error rate characteristic (plot "Softvalue=0: ○" in the figure) when an LLR value is calculated assuming that a soft decision value is 0, an error rate characteristic (plot "No change: ×" ideal curve in the figure) when an LLR value is calculated in the case of no interference and an error rate characteristic (plot "est sigma: Δ" in the figure) when an LLR value is calculated by estimating an interference value according to this embodiment.

Therefore, this embodiment compares the reception power of a signal at a interference position measured by the interference position reception power measuring section 208B with the reception power value of a desired signal measured by the desired signal measuring section 208D for each subcarrier, decides a symbol to be actually treated as an interference symbol, and can thereby correctly select a symbol to be actually treated as an interference symbol even in a fading environment, etc., and improve the characteristic compared to the conventional method of setting the magnitude of $\sigma^2$ to the magnitude of noise when an LLR value is calculated (Normal) or the method described in Patent Document 1 (soft value = 0).

(Embodiment 2)

Embodiment 1 above mainly assumes a PSK-based modulation scheme. According to Embodiment 1, the position of interference is set by notifying an interference position and then the magnitude of an interference signal is estimated from a difference between the received signal and desired signal. However, it is difficult to apply this method to a QAM-based modulation scheme in which power of each symbol of a received signal changes depending on data.

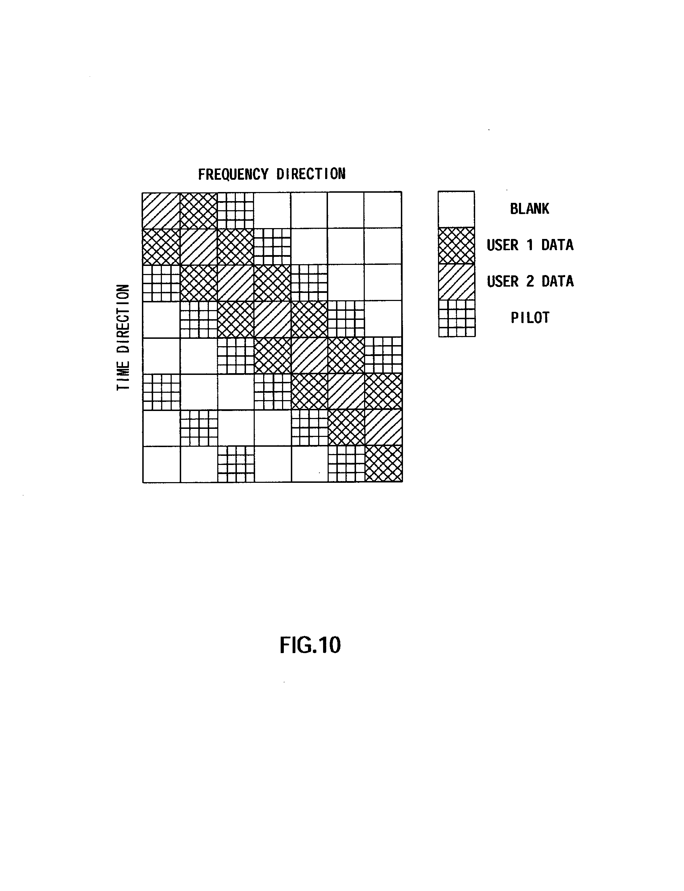

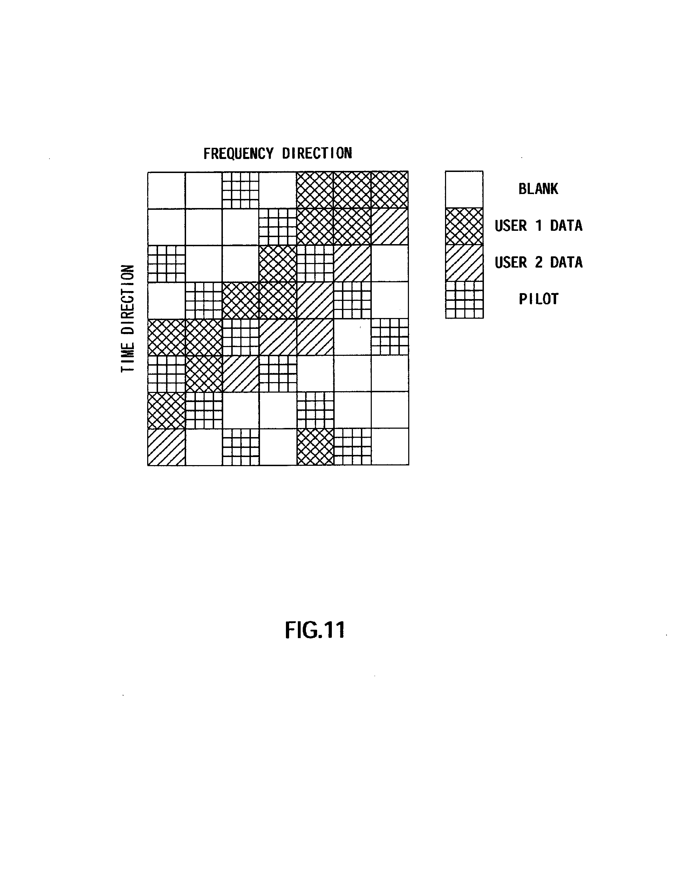

Therefore, as shown in FIG.10 and FIG.11, this embodiment assumes that the positions of subcarriers to which a pilot sequence is assigned are the same for the own cell and other cell and assigns sequences orthogonal to their respective sequences. Resource assignment of users and pilots of a base station of the own cell is shown in FIG. 10 and that in the other cell is shown in FIG.11.

By so doing, it is possible to measure average power of the own cell and other cell by the terminals of user 1 and user 2.

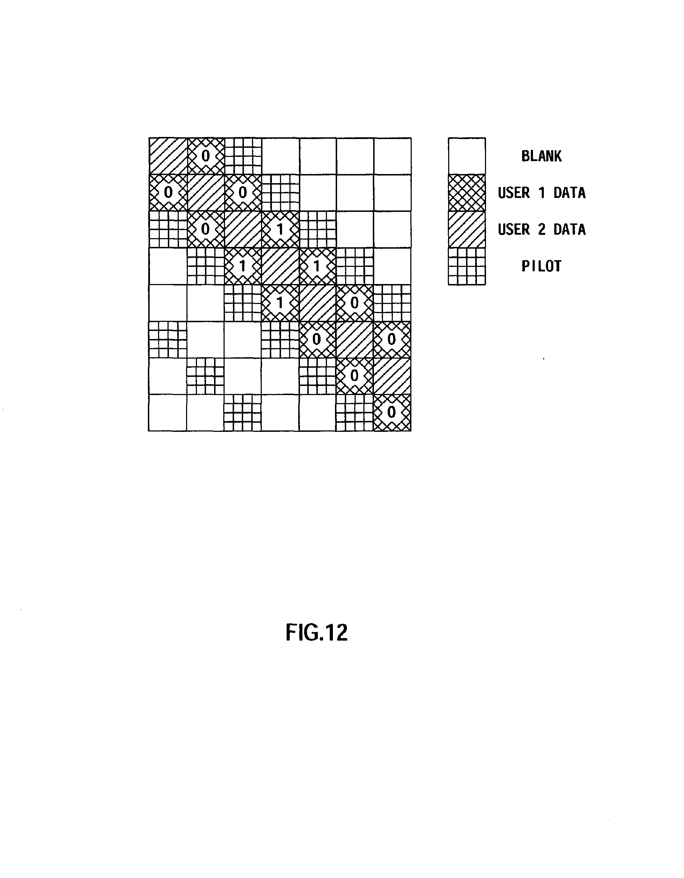

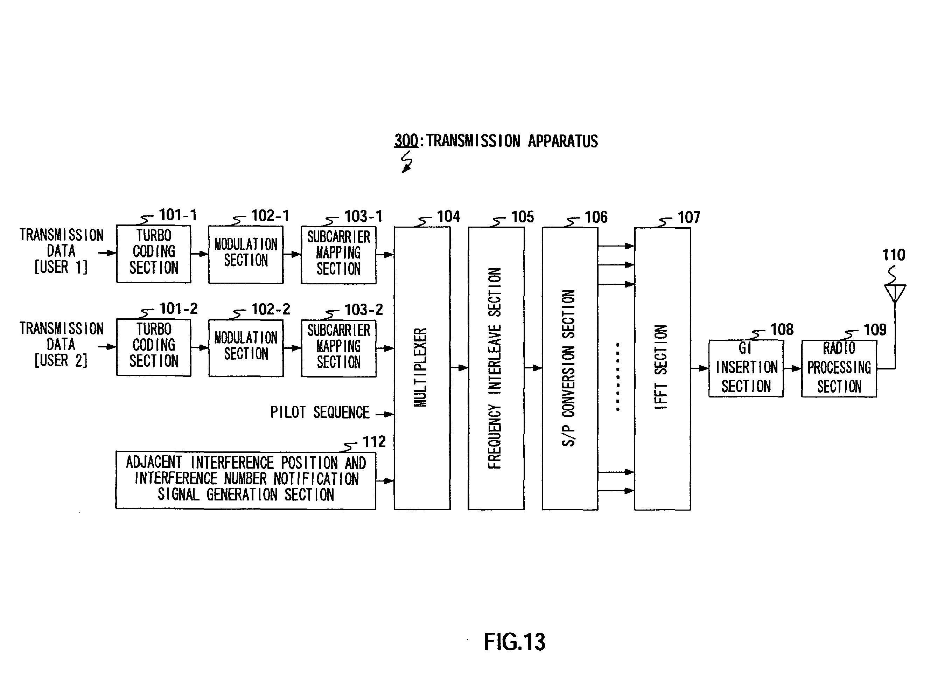

Furthermore, in this embodiment, an adjacent interference position and interference number notification signal generation section 112 shown in FIG. 13 notifies interference positions as shown in FIG.12 and information as to from which base station interference is received. This makes it possible to know interference positions and from which base station interference is received with respect to a unit defined by the time and frequency domains of user 1.

In Embodiment 1, power of interference is calculated from reception power of symbols in a unit where interference occurs, while in this embodiment 2, reception power from a base station in the other cell can be known from pilots as described above and this corresponds to interference power, and therefore this value is reflected in the calculation of $\sigma^2$ of an LLR.

Therefore, in this embodiment, calculations can be performed independently of modulation schemes of an interference signal and a desired signal.

(Embodiment 3)

In Embodiments 1 and 2, an interference position can be detected by decoding an interference position notification signal on the receiving side. This embodiment decides an interference position and estimates interference power by deciding power of a received signal against a threshold.

A transmission apparatus of this embodiment is shown inFIG.14. Unlike the transmission apparatus 100 in FIG. 7, no adjacent interference position notification signal generation section 111 is connected to the transmission apparatus 400.

Suppose the reception apparatus sets a threshold assuming that a value obtained by subtracting power of an actually received symbol from power of the received signal obtained from a pilot is interference signal power + noise power per symbol and treats a symbol position exceeding the threshold as an interference received symbol.

This interference power + noise power per symbol can be expressed by the following Expression:

$$\Delta P_r(k,m) = (|r(k,m)| - |h(k)| \cdot |s|)^2 \qquad (1)$$

In Expression (1), r (k,m) denotes the mth OFDM symbol on the kth subcarrier.

|h (k) | is magnitude of fading of a desired signal obtained from a pilot signal and |s| is magnitude of a transmission signal. FIG.15 schematically shows Expression (1).

Assuming that the magnitude of the threshold is Tp, it is decided that interference has occurred when the result of Expression (1) is greater than the threshold Tp and the magnitude of Expression (1) is assumed to be the value of $\sigma^2$ when an LLR value is calculated.

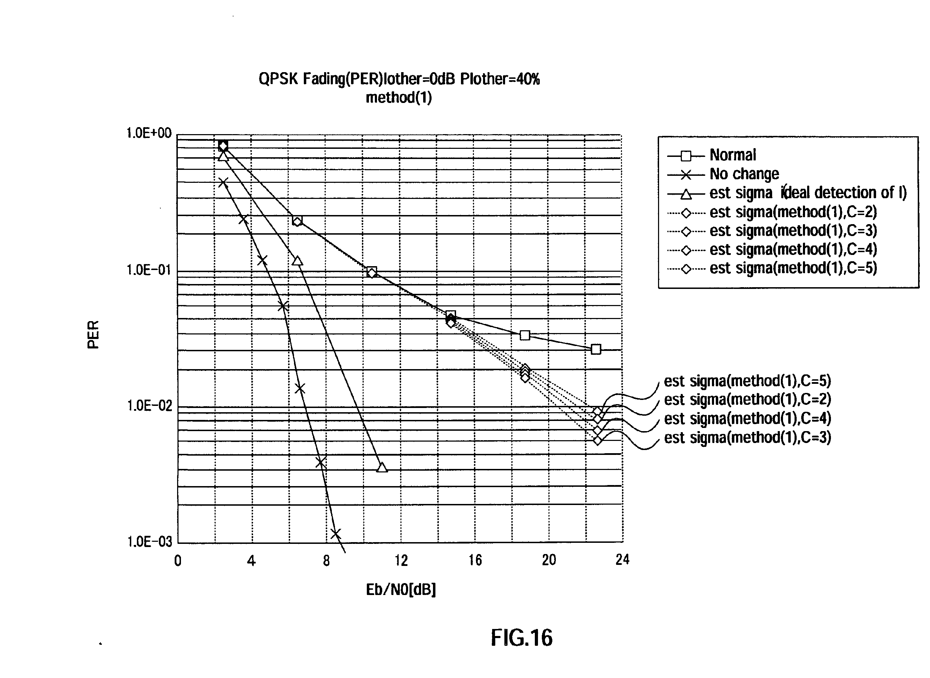

FIG.16 shows an error rate characteristic when an LLR value is calculated (est sigma) in this embodiment. Therefore, according to this embodiment, it is possible to improve the characteristic compared to the conventional method (Normal) of setting the magnitude of $\sigma^2$ when the LLR is calculated to the magnitude of noise and the method described in Patent Document 1.

(Embodiment 4)

While Embodiment 3 decides interference positions using one threshold, this embodiment decides interference positions based on decision rates of a modulation scheme and magnitude of a noise level.

$$\Delta P_r(k,m) = \begin{cases} \left|\hat{r}(k,m) - |h(k)| \cdot s\right|^2 & real(\hat{r}(k,m)) > 0, imag(\hat{r}(k,m)) > 0 \\ \left|\hat{r}(k,m) + |h(k)| \cdot s\right|^2 & real(\hat{r}(k,m)) < 0, imag(\hat{r}(k,m)) > 0 \\ \left|\hat{r}(k,m) + |h(k)| \cdot s^*\right|^2 & real(\hat{r}(k,m)) < 0, imag(\hat{r}(k,m)) < 0 \\ \left|\hat{r}(k,m) - |h(k)| \cdot s^*\right|^2 & real(\hat{r}(k,m)) > 0, imag(\hat{r}(k,m)) < 0 \end{cases} \quad \cdots (2)$$

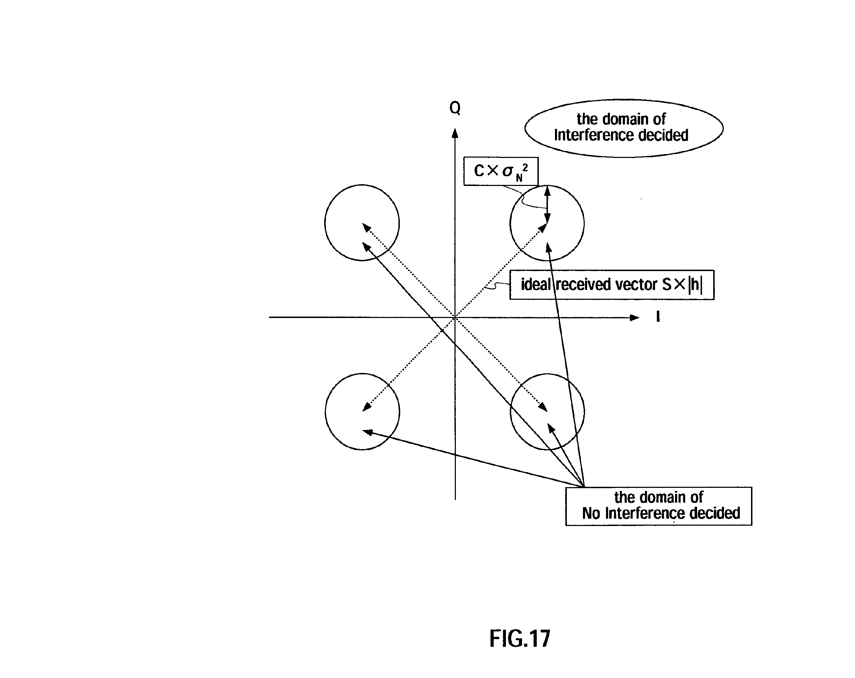

FIG.17 schematically shows Expression (2). In FIG.17, for example, when a received signal is in a first quadrant, it is decided that interference exists if the received signal is outside a decision circle in the first quadrant. The magnitude of interference power + noise power becomes the magnitude of Expression (2) and this value is used for the magnitude of $\sigma^2$ when an LLR value is calculated.

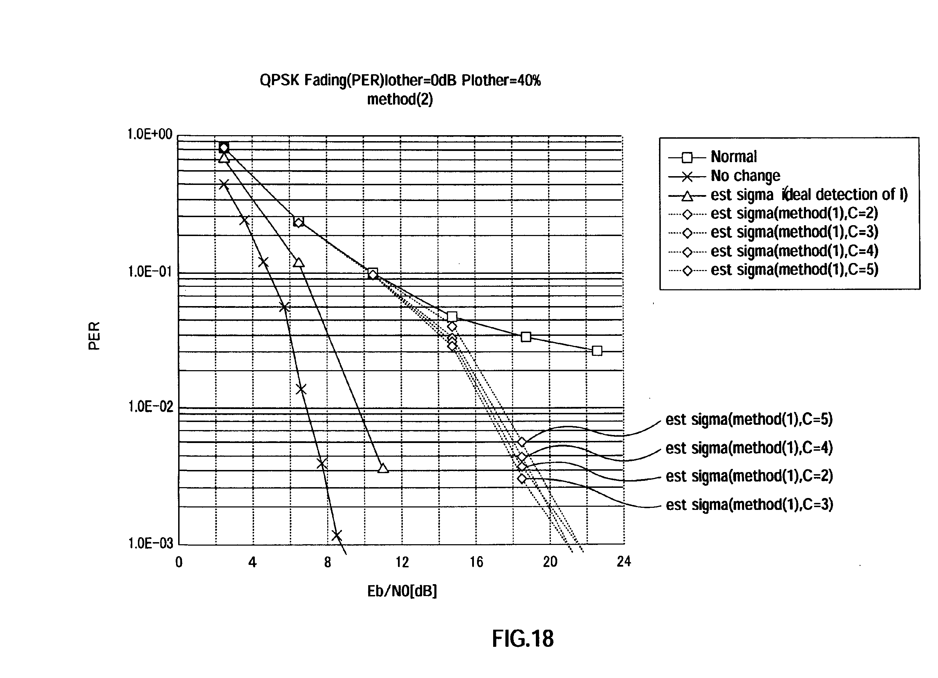

FIG.18 shows an error rate characteristic when an LLR value is calculated (est sigma) according to this embodiment. Therefore, according to this embodiment, it is possible to improve the characteristic compared to the conventional method (Normal) of setting the magnitude of $\sigma^2$ when the LLR value is calculated to the magnitude of noise and the method described in Patent Document 1.

(Embodiment 5)

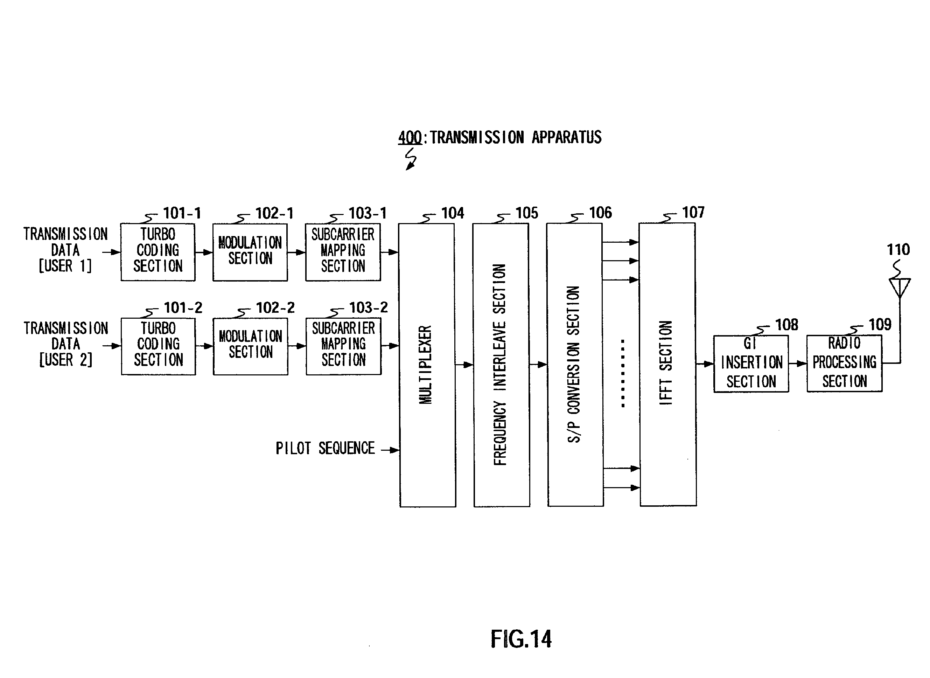

The method of estimating interference positions and estimating interference power by a blind decision from reception power as described in Embodiment 3 and Embodiment 4 above results in greater deterioration compared to the method of notifying interference positions and estimating interference power as in Embodiment 1 and Embodiment 2 (see the error rate characteristics in FIG.16, FIG.18). Thus, this embodiment proposes a reception apparatus capable of further improving an error rate characteristic when the transmission apparatus 400 in FIG.14 is used (when interference positions are decided by a blind decision) compared to Embodiment 3 and Embodiment 4.

This embodiment will be explained using the reception apparatus 200 in FIG. 8 which has been explained in Embodiment 1. However, the reception apparatus 200 of this embodiment has different processing at the interference symbol determining section 208 because it does not receive hopping pattern information.

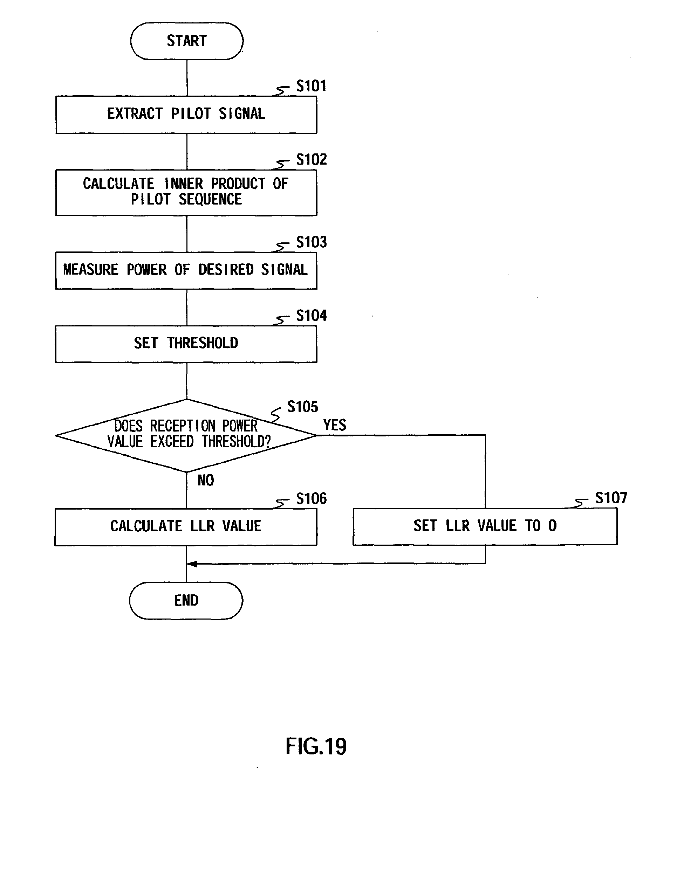

The operations of the interference symbol determining section 208 and turbo decoding section 209 in the reception apparatus 200 in this embodiment will be explained using a flow chart shown in FIG.19.

In step S101, the interference symbol determining section 208 extracts a pilot signal from each subcarrier signal input from the channel separation section 206. Next, in step S102, since the pilot sequence is known, an inner product of the extracted pilot signal sequence and the known pilot signal is calculated.

Next, in step S103, the interference symbol determining section 208 divides the calculated inner product of the pilot sequence by the length of the pilot sequence to measure reception power of a desired signal. Next, in step S104, a threshold for deciding the influence of the interference signal on the desired signal is set in consideration of the reception power value + margin of the measured desired signal.

Next, in step S105, the interference symbol determining section 208 compares the reception power value with a set threshold for each subcarrier to decide whether the reception power value exceeds the threshold or not. When the reception power value does not exceed the threshold (step S105: NO), it is decided that there is no influence of a variance by interference and this fact is notified to the turbo decoding section 209. In this case, the turbo decoding section 209 calculates an LLR value of the symbol of the subcarrier in step S106.

On the contrary, when the reception power value exceeds the threshold (step S105: YES), the interference symbol determining section 208 decides that the influence of the interference on the variance is large and notifies this to the turbo decoding section 209. In this case, in step S107, the turbo decoding section 209 sets the soft decision value of the symbol of the subcarrier to "0".

As shown above, the decoding processing by the interference symbol determining section 208 and turbo decoding section 209 in the reception apparatus 200 of this embodiment can correctly decide the influence of interference on symbols for each subcarrier and reliably carry out error correction during soft decision decoding.

(Embodiment 6)

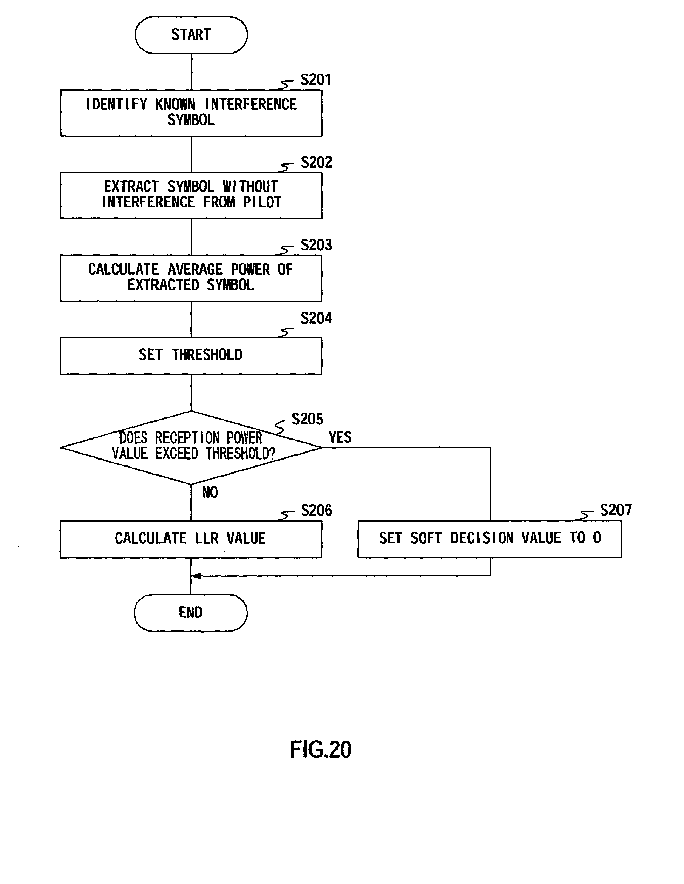

In Embodiment 5, all desired signal power is estimated using pilot signals, but this embodiment uses a method of setting a threshold by calculating average power of extracted symbols based on known interference symbols. Turbo decoding processing corresponding to this embodiment will be explained using a flow chart in FIG.20. The transmission apparatus 100 in FIG.1 will be used as the transmission apparatus.

In step S201, interference symbols of each subcarrier signal which receives interference of an adjacent cell notified by the adjacent interference position notification signal generation section 111 out of the respective subcarrier signals input from the channel separation section 206 are identified.

Next, in step S202, symbols which do not receive interference from a pilot signal of the cell in which the interference symbols are identified are extracted. Next, in step S203, average power of the extracted symbols is calculated.

Next, in step S204, a threshold for deciding the influence of the interference signal on the desired signal is set based on the calculated average power of the symbols in consideration of the average power+ margin.

Next, in step S205, the average power value of the calculated data signal is compared with the set threshold for each subcarrier and it is decided whether the reception power value exceeds the threshold or not. When the reception power value does not exceed the threshold (step S205: NO), it is decided that the influence of interference on the variance is small and LLR values of symbols of the subcarrier are calculated.

On the other hand, when the reception power value exceeds the threshold (step S205: YES), it is decided that the influence of interference on the variance is large and the soft decision value of the symbol of the subcarrier is set to "0" in step S207.

As shown above, according to the decoding processing by the interference power calculation section 208 and turbo decoding section 209 in the reception apparatus 200 of this embodiment, it is possible to correctly decide the influence of interference on each symbol in consideration of the interference state for each cell and reliably carry out error correction during soft decision decoding.

(Embodiment 7)

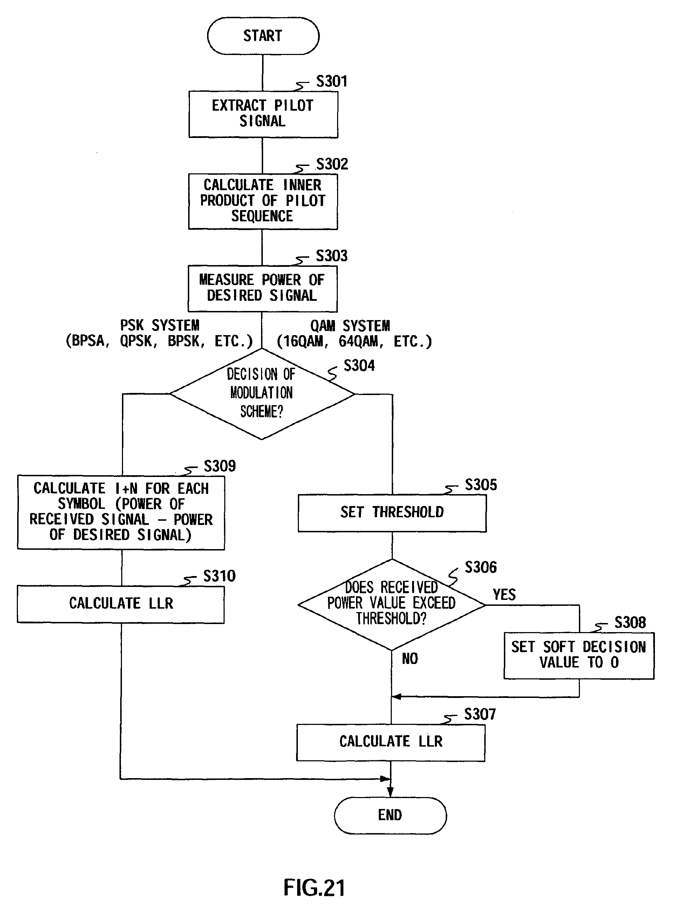

This embodiment will explain processing of the interference symbol determining section 208 and turbo decoding section 209 capable of improving an error rate characteristic satisfactorily even when a received signal is an adaptively modulated signal using a flow chart in FIG.21.

Here, an environment in which PSK-based modulation (BPSK, QPSK, 8PSK) is selected out of adaptive modulation schemes is an environment in which there is a great amount of interference and the SNR value is small. In such an environment, if a threshold is set and an LLR value is set to "0" as in the case of the above described turbo decoding processing, the error rate characteristic deteriorates more than turbo decoding processing which reflects the amount of interference in the value of $\sigma^2$ when an LLR value is calculated without setting the soft decision value to "0".

Furthermore, an environment in which QAM-based modulation (16QAM, 64QAM) is selected out of adaptive modulation schemes is an environment in which there is less interference and Eb/N0 is large. However, in the case of QAM modulation, there is a variation in vibration due to data, and therefore it is difficult to calculate I (interference power) + N (thermal noise power) from the received signal.

Thus, in the turbo decoding processing in FIG.21, when the modulation scheme is a PSK system, the LLR value is calculated without setting any threshold and when the modulation scheme is a QAM system, a threshold is set and the soft decision value is set to "0".

In step S301 of FIG.21, a pilot signal is extracted from each subcarrier signal input from the channel separation section 206. Next, in step S302, since the pilot sequence is known, an inner product of the extracted pilot signal sequence and known pilot signal is calculated.

Next in step S303, the calculated inner product of the pilot sequence is divided by the length of the pilot sequence to measure the reception power of the desired signal. Next, in step S304, it is decided whether the modulation scheme of the received data sequence is a PSK system (BPSK, QPSK, 8PSK, etc.) or QAM system (16QAM, 64QAM, etc.).

When the decided modulation scheme is a QAM system, in step S305, a threshold for deciding the influence of the interference signal on the desired signal is set in consideration of the reception power value + margin of the desired signal measured in step S303.

Next, in step S306, the reception power value is compared with the set threshold for each subcarrier and it is decided whether the reception power value exceeds the threshold or not. When the reception power value does not exceed the threshold (step S306: NO), it is decided that there is little influence of interference on the variance and LLR values of symbols of the subcarrier are calculated in step S307.

On the other hand, when the reception power value exceeds the threshold (step S306: YES), it is decided that the influence of interference on the variance is large and the soft decision values of the symbols of the subcarrier are set to "0" in step S308.

Furthermore, in step S304, when the decided modulation scheme is a PSK system, I (interference power) + N (thermal noise power) is calculated for each symbol in step S309.

In this case, if the interference state of each cell is known, there is a received signal with no interference signal in the pilot section in each cell, and therefore it is possible to calculate I+N for each symbol by calculating the reception power of this received signal, calculating the reception power corresponding to the desired signal section in this received signal and subtracting the desired signal power from the received signal power.

Next, in step S310, the LLR value is calculated for each symbol based on I+N for each symbol calculated in step S309.

As shown above, according to the decoding processing by the interference power calculation section 208 and turbo decoding section 209 in the reception apparatus 200 of this embodiment, when adaptive modulation schemes such as QAM system and PSK system are used, the interference state is classified by modulation scheme, the influence of interference on symbols of each subcarrier is decided and decoding processing is performed in such a way that the soft decision value of a symbol having a large influence of interference is set to 0, and therefore it is possible to correctly decide the influence of interference on each symbol and improve the error correcting performance during soft decision decoding.

In this embodiment, the transmission apparatus 400 in FIG.14 is used and interference positions are decided by the reception apparatus 200 based on a blind decision, but it is also possible to notify the interference positions using the transmission apparatus 100 in FIG.7, and calculate the LLR value based on the magnitude of interference power.

The present invention is not limited to the above described embodiments and can be implemented modified in various ways.

The above described embodiments have described the case where the OFDM reception apparatus and method of the present invention are applied to an FH-OFDM system with a single antenna, but the present invention is not limited to this and effects similar to those of the embodiments can be obtained when the present invention is applied to an FH-OFDM system with multiple antennas such as an MIMO (Multiple-Input Multiple-Output)-OFDM system.

Furthermore, the above described embodiments have described the apparatus and method which correctly decide symbols which should be actually treated as interference symbols even when collision of hopping patterns occur between mutually adjacent cells, and can thereby improve the error correcting performance during soft decision decoding, but even if collision of hopping patterns occurs between mutually adjacent sectors, it is possible to improve the error correcting performance during soft decision decoding in a similar configuration. In this regard, the communication terminal can easily recognize collision positions of hopping patterns between sectors by hopping pattern information notified from the base station of the own cell, for example.

The point is to provide an interference position determining section that determines hopping positions where interference occurs based on the hopping pattern of the own sector and a hopping pattern of an adjacent sector, an extraction section that extracts a pilot signal from each subcarrier of the received frequency hopping OFDM signal, a measuring section that measures reception power of a desired signal based on the pilot signal sequence extracted by the extraction section and a known pilot signal sequence, a comparison section that compares the reception power of the signal at the interference position determined by the interference position determining section with the reception power value of the desired signal measured by the measuring section for each subcarrier and a decoding section that carries out turbo decoding by selecting whether the reception power of symbols of each subcarrier should be used as is or should be set to 0.

An aspect of the OFDM reception apparatus of the present invention adopts a configuration comprising an interference position determining section that determines hopping positions where interference occurs based on hopping pattern information sent from a base station of an adjacent cell and the hopping pattern of the own cell, an extraction section that extracts a pilot signal from each subcarrier of the received frequency hopping OFDM signal, a measuring section that measures reception power of a desired signal based on the pilot signal sequence extracted by the extraction section and a known pilot signal sequence, a comparison section that compares the reception power of the signal at the interference position determined by the interference position determining section with the reception power value of the desired signal measured by the measuring section for each subcarrier and a decoding section that decodes symbols of each subcarrier based on the comparison result.

Another aspect of the OFDM reception apparatus of the present invention adopts a configuration comprising an interference position determining section that determines hopping positions where interference occurs based on a hopping pattern of the own sector and hopping pattern of an adjacent sector, an extraction section that extracts a pilot signal from each subcarrier of the frequency hopping OFDM signal, a measuring section that measures the reception power of a desired signal based on a pilot signal sequence extracted by the extraction section and a known pilot signal sequence, a comparison section that compares the reception power of a signal at the interference position determined by the interference position determining section with the reception power value of a desired signal measured by the measuring section for each subcarrier and a decoding section that decodes symbols of each subcarrier based on the comparison result.

These configurations make it possible to correctly decide influences of interference on each symbol of a frequency hopping scheme and improve the error correcting performance during soft decision decoding.

In a further aspect of the OFDM reception apparatus of the present invention, the extraction section extracts symbols which have not received interference from a pilot signal of each subcarrier of the frequency hopping OFDM signal sent from a known interference cell out of the plurality of cells and the comparison section calculates average power of the symbols extracted by the extraction section, sets a threshold for deciding the influence of the interference signal on a desired signal based on the calculated average power of the symbols and compares the calculated average power of the data signal with the set threshold for each subcarrier.

A still further aspect of the OFDM signal reception apparatus of the present invention is an OFDM reception apparatus that receives frequency hopping OFDM signals sent from a plurality of cells, comprising an extraction section that extracts a pilot signal from each subcarrier of the frequency hopping OFDM signal, a measuring section that measures reception power of a desired signal based on the pilot signal sequence extracted by the extraction section and a known pilot signal sequence, a decision section that decides the modulation scheme of the frequency hopping OFDM signal, a setting section that sets a threshold for deciding the influence of the interference signal on the desired signal based on the reception power of the desired signal measured by the measuring section when the modulation scheme decided by the decision section is a QAM scheme, a comparison section that compares the reception power value with the threshold set by the setting section for each subcarrier when the modulation scheme decided by the decision section is a QAM scheme, a calculation section that calculates interference power for each symbol based on the reception power of the desired signal measured by the measuring section when the modulation scheme decided by the decision section is a PSK scheme and a decoding section that carries out turbo decoding by selecting whether the reception power of the symbol of each subcarrier should be used as is or should be set to 0 based on the comparison result when the modulation scheme decided by the decision section is a QAM scheme and carries out turbo decoding on symbols of each subcarrier based on the interference power calculated by the calculation section when the modulation scheme decided by the decision section is a PSK scheme.

According to this configuration, it is possible to correctly decide influences of interference on each symbol for each adaptive modulation scheme in consideration of the interference state and improve the error correcting performance during soft decision decoding.

As explained above, the present invention can correctly detect symbols which should be treated as interference symbols and thereby realize an OFDM signal reception apparatus and method capable of improving the error correcting performance during soft decision decoding.

This application is based on the Japanese Patent ApplicationNo. 2003-71016 filed on March 14, 2003, entire content of which is expressly incorporated by reference herein.

Industrial Applicability

The present invention is suitable for use in a portable information terminal such as a cellular phone and a base station thereof, etc.

## Claims

**1.** An OFDM reception apparatus comprising:

an interference position determining section that determines hopping positions where interference occurs based on hopping pattern information sent from a base station of an adjacent cell and a hopping pattern of the own cell;
an extraction section that extracts a pilot signal from each subcarrier of the received frequency hopping OFDM signal;
a measuring section that measures reception power of a desired signal based on the pilot signal sequence extracted by said extraction section and a known pilot signal sequence;
a comparison section that compares the reception power of the signal at the interference position determined by said interference position determining section with the reception power value of the desired signal measured by said measuring section for each subcarrier; and
a decoding section that carries out turbo decoding by selecting whether the reception power of symbols of said each subcarrier should be used as is or should be set to 0 based on said comparison result.

**2.** An OFDM reception apparatus comprising:

an interference position determining section that determines hopping positions where interference occurs based on a hopping pattern of the own sector and hopping pattern of an adjacent sector;
an extraction section that extracts a pilot signal from each subcarrier of the received frequency hopping OFDM signal;
a measuring section that measures the reception power of a desired signal based on a pilot signal sequence extracted by said extraction section and a known pilot signal sequence;
a comparison section that compares the reception power of a signal at the interference position determined by said interference position determining section with the reception power value of a desired signal measured by said measuring section for each subcarrier; and
a decoding section that carries out turbo decoding by selecting whether the reception power of symbols of said each subcarrier should be used as is or should be set to 0 based on said comparison result.

**3.** The OFDM reception apparatus according to claim 1 or 2, wherein said comparison section sets a threshold for deciding an influence of an interference signal on a desired signal based on the reception power of the desired signal measured by said measuring section and compares the reception power value of the desired signal measured by said measuring section with said set threshold for each subcarrier.

**4.** The OFDM reception apparatus according to claim 1, wherein said extraction section extracts symbols which have not received interference from a pilot signal of each subcarrier of the frequency hopping OFDM signals sent from base stations of said plurality of adjacent cells, and

said comparison section calculates average power of the symbols extracted by said extraction section, sets a threshold for deciding the influence of the interference signal on a desired signal based on the calculated average power of the symbols and compares the average power of said calculated data signal with said set threshold for each subcarrier.

**5.** The OFDM reception apparatus according to claim 2, wherein said extraction section extracts symbols which have not received interference from a pilot signal of each subcarrier of the frequency hopping OFDM signals sent from the base stations of said adjacent sector, and

said comparison section calculates average power of the symbols extracted by said extraction section, sets a threshold for deciding an influence of the interference signal on the desired signal based on the calculated average power of the symbols and compares the average power of said calculated data signal with said set threshold for each subcarrier.

**6.** The OFDM reception apparatus according to claim 1 or 2, further comprising:

decision section that decides a modulation scheme of a received frequency hopping OFDM signal;
a setting section that sets a threshold for deciding the influence of the interference signal on the desired signal based on the reception power of the desired signal measured by said measuring section when the modulation scheme decided by said decision section is a QAM scheme;
a comparison section that compares the reception power value with the threshold set by said setting section for each subcarrier when the modulation scheme decided by said decision section is a QAM scheme; and
a calculation section that calculates interference power for each symbol based on the reception power of the desired signal measured by said measuring section when the modulation scheme decided by said decision section is a PSK scheme,

wherein said decoding section carries out turbo decoding by selecting whether the reception power of the symbols of said each subcarrier should be used as is or should be set to 0 based on said comparison result when the modulation scheme decided by said decision section is a QAM scheme and carries out turbo decoding on the symbols of said each subcarrier based on the interference power calculated by said calculation section when the modulation scheme decided by said decision section is a PSK scheme.

**7.** An OFDM reception method comprising:

an interference position determining step of determining hopping positions where interference occurs based on hopping pattern information on adjacent cells or adjacent sectors and a hopping pattern of the own cell or own sector;

an extraction step of extracting a pilot signal from each subcarrier of the received frequency hopping OFDM signal;
a measuring step of measuring the reception power of a desired signal based on a pilot signal sequence extracted in said extraction step and a known pilot signal sequence;
a comparison step of comparing reception power of a signal at the interference position determined in said interference position determining step with the reception power value of a desired signal measured in said measuring step for each subcarrier; and
a decoding step of carrying out turbo decoding by selecting whether the reception power of the symbols of said each subcarrier should be used as is or should be set to 0 based on said comparison result.

P[PROBABILITY DENSITY]
D[RECEIVED VALUE]
1
0
$P_1(D_{rx})$
$P_0(D_{rx})$
$-\alpha$
RECEIVED VALUE $D_{rx}$
0
$\alpha$ (decision_rate)
DECISION AXIS

FIG.1 (PRIOR ART)

P[PROBABILITY DENSITY]
D[RECEIVED VALUE]
1
0
$P_1(D_{rx})$
$P_0(D_{rx})$
- α
RECEIVED VALUE $D_{rx}$
0
α (decision_rate)
DECISION AXIS

FIG.2 (PRIOR ART)

FREQUENCY DIRECTION
TIME DIRECTION
BLANK
USER 1 DATA
USER 2 DATA
PILOT

FIG.3 (PRIOR ART)

FREQUENCY DIRECTION
TIME DIRECTION
BLANK
USER 1 DATA
USER 2 DATA
PILOT

FIG.4 (PRIOR ART)

0
0
0
0
1
0
0
1
1
1
1
1
1
1
1
0
0
1
1
0
1
1
0
1
0
0
0

FIG.5 (PRIOR ART)

QPSK Fading(PER)Iother=-3dB
$P_{Iother}$=10%
Normal
softvalue=0
No change
PER
1.0E+00
1.0E-01
1.0E-02
1.0E-03
6
8
10
12
14
Eb/N0[dB]

FIG.6 (PRIOR ART)

100: TRANSMISSION APPARATUS
TRANSMISSION DATA [USER 1]
101-1
TURBO CODING SECTION
102-1
MODULATION SECTION
103-1
SUBCARRIER MAPPING SECTION
TRANSMISSION DATA [USER 2]
101-2
TURBO CODING SECTION
102-2
MODULATION SECTION
103-2
SUBCARRIER MAPPING SECTION
PILOT SEQUENCE
111
ADJACENT INTERFERENCE POSITION NOTIFICATION SIGNAL GENERATION SECTION
104
MULTIPLEXER
105
FREQUENCY INTERLEAVE SECTION
106
S/P CONVERSION SECTION
107
IFFT SECTION
108
GI INSERTION SECTION
109
RADIO PROCESSING SECTION
110

FIG.7

200: RECEPTION APPARATUS
201
202
RADIO PROCESSING SECTION
203
GI ELIMINATION SECTION
204
FFT SECTION
205
FREQUENCY DEINTERLEAVE SECTION
206
CHANNEL SEPARATION SECTION
207
DEMODULATION SECTION
209
TURBO DECODING SECTION
USER 1 DATA
208: INTERFERENCE SYMBOL DETERMINING SECTION
208A
INTERFERENCE POSITION DETERMINING SECTION
208B
INTERFERENCE POSITION RECEPTION POWER MEASURING SECTION
208C
PILOT EXTRACTION SECTION
208D
DESIRED SIGNAL MEASURING SECTION
208E
COMPARISON SECTION

FIG.8

QPSK Fading(PER)Iother=0dB
$P_{Iother}$=5%
Normal
softvalue=0
No change
est sigma
PER
1.0E+00
1.0E-01
1.0E-02
1.0E-03
6
8
10
12
14
Eb/N0[dB]

FIG.9

FREQUENCY DIRECTION
TIME DIRECTION
BLANK
USER 1 DATA
USER 2 DATA
PILOT

FIG.10

FREQUENCY DIRECTION
TIME DIRECTION
BLANK
USER 1 DATA
USER 2 DATA
PILOT

FIG.11

0
0
0
0
1
1
1
1
0
0
0
0
0
BLANK
USER 1 DATA
USER 2 DATA
PILOT

FIG.12

300: TRANSMISSION APPARATUS
TRANSMISSION DATA [USER 1]
101-1
TURBO CODING SECTION
102-1
MODULATION SECTION
103-1
SUBCARRIER MAPPING SECTION
TRANSMISSION DATA [USER 2]
101-2
TURBO CODING SECTION
102-2
MODULATION SECTION
103-2
SUBCARRIER MAPPING SECTION
PILOT SEQUENCE
112
ADJACENT INTERFERENCE POSITION AND INTERFERENCE NUMBER NOTIFICATION SIGNAL GENERATION SECTION
104
MULTIPLEXER
105
FREQUENCY INTERLEAVE SECTION
106
S/P CONVERSION SECTION
107
IFFT SECTION
108
GI INSERTION SECTION
109
RADIO PROCESSING SECTION
110

FIG.13

400: TRANSMISSION APPARATUS
TRANSMISSION DATA [USER 1]
TRANSMISSION DATA [USER 2]
101-1
TURBO CODING SECTION
101-2
TURBO CODING SECTION
102-1
MODULATION SECTION
102-2
MODULATION SECTION
103-1
SUBCARRIER MAPPING SECTION
103-2
SUBCARRIER MAPPING SECTION
PILOT SEQUENCE
104
MULTIPLEXER
105
FREQUENCY INTERLEAVE SECTION
106
S/P CONVERSION SECTION
107
IFFT SECTION
108
GI INSERTION SECTION
109
RADIO PROCESSING SECTION
110

FIG.14

Q
I
C×$\sigma_N^2$
ideal received vector S×|h|
the circle of ideal received level (radius is |S|×|h|)
the domain of Interference decided
the domain of No Interference decided

FIG.15

QPSK Fading(PER)Iother=0dB PIother=40%
method(1)
PER
1.0E+00
1.0E-01
1.0E-02
1.0E-03
0
4
8
12
16
20
24
Eb/N0[dB]
Normal
No change
est sigma (ideal detection of I)
est sigma(method(1),C=2)
est sigma(method(1),C=3)
est sigma(method(1),C=4)
est sigma(method(1),C=5)
est sigma(method(1),C=5)
est sigma(method(1),C=2)
est sigma(method(1),C=4)
est sigma(method(1),C=3)

FIG.16

the domain of
Interference decided
ideal received vector S×|h|
I
Q
C×σ
2
N
the domain of
No Interference decided

FIG.17

QPSK Fading(PER)Iother=0dB PIother=40%
method(2)
PER
1.0E+00
1.0E-01
1.0E-02
1.0E-03
0
4
8
12
16
20
24
Eb/N0[dB]
Normal
No change
est sigma ideal detection of I)
est sigma(method(1),C=2)
est sigma(method(1),C=3)
est sigma(method(1),C=4)
est sigma(method(1),C=5)
est sigma(method(1),C=5)
est sigma(method(1),C=4)
est sigma(method(1),C=2)
est sigma(method(1),C=3)


FIG.18

START
S101
EXTRACT PILOT SIGNAL
S102
CALCULATE INNER PRODUCT OF PILOT SEQUENCE
S103
MEASURE POWER OF DESIRED SIGNAL
S104
SET THRESHOLD
S105
DOES RECEPTION POWER VALUE EXCEED THRESHOLD?
YES
NO
S106
CALCULATE LLR VALUE
S107
SET LLR VALUE TO 0
END

FIG.19

START
S201
IDENTIFY KNOWN INTERFERENCE SYMBOL
S202
EXTRACT SYMBOL WITHOUT INTERFERENCE FROM PILOT
S203
CALCULATE AVERAGE POWER OF EXTRACTED SYMBOL
S204
SET THRESHOLD
S205
DOES RECEPTION POWER VALUE EXCEED THRESHOLD?
YES
NO
S206
CALCULATE LLR VALUE
S207
SET SOFT DECISION VALUE TO 0
END

FIG.20

START
S301
EXTRACT PILOT SIGNAL
S302
CALCULATE INNER PRODUCT OF PILOT SEQUENCE
S303
MEASURE POWER OF DESIRED SIGNAL
PSK SYSTEM (BPSA, QPSK, BPSK, ETC.)
QAM SYSTEM (16QAM, 64QAM, ETC.)
DECISION OF MODULATION SCHEME?
S304
S309
CALCULATE I+N FOR EACH SYMBOL (POWER OF RECEIVED SIGNAL - POWER OF DESIRED SIGNAL)
S310
CALCULATE LLR
S305
SET THRESHOLD
S306
DOES RECEIVED POWER VALUE EXCEED THRESHOLD?
YES
NO
S308
SET SOFT DECISION VALUE TO 0
S307
CALCULATE LLR
END

FIG.21

## INTERNATIONAL SEARCH REPORT

International application No. PCT/JP2004/003437

A. CLASSIFICATION OF SUBJECT MATTER
Int.Cl[7] H04J11/00, H04J13/06

According to International Patent Classification (IPC) or to both national classification and IPC

B. FIELDS SEARCHED

Minimum documentation searched (classification system followed by classification symbols)
Int.Cl[7] H04J11/00, H04J13/06

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2001/73999 A1 (ATHEROS COMMUNICATIONS, INC.), 04 October, 2001 (04.10.01), Full text; all drawings & JP 2003-529287 A & AU 200143707 A & US 2002/0051498 A1 & EP 1275214 A1 & US 6507619 B1 & KR 2003017482 A | 1-7 |
| A | JP 2001-358694 A (Lucent Technologies Inc.), 26 December, 2001 (26.12.01), Full text; all drawings & EP 1148673 A2 & AU 200135175 A & BR 200101426 A & CA 2338471 A1 & CN 1318916 A & KR 2001098657 A | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 June, 2004 (11.06.04) | 29 June, 2004 (29.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No. PCT/JP2004/003437

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-358695 A (Lucent Technologies Inc.), 26 December, 2001 (26.12.01), Full text; all drawings & EP 1148674 A2 & AU 200135177 A & CA 2339515 A1 & BR 200101459 A & CN 1318953 A & KR 2001098569 A | 1-7 |
| A | JP 09-064884 A (Toshiba Corp.), 07 March, 1997 (07.03.97), Full text; all drawings (Family: none) | 1-7 |
| A | JP 06-343066 A (Nippon Telegraph And Telephone Corp.), 13 December, 1994 (13.12.94), Full text; all drawings (Family: none) | 1-7 |
| A | JP 11-355240 A (Nippon Hoso Kyokai), 24 December, 1999 (24.12.99), Full text; all drawings (Family: none) | 1-7 |

Form PCT/ISA/210 (continuation of second sheet) (January 2004)